# EUROPEAN PATENT APPLICATION

(11) **EP 3 879 368 A1**
(43) Date of publication of application: **15.09.2021**
(21) Application number: 20162895.5
(22) Date of filing: 13.03.2020
(51) Int. Cl.: G05B 19/418

(54) **DATA EXCHANGE TOOL**

(71) Applicant: Siemens Aktiengesellschaft, 80333 München (DE)
(72) Inventor: BEHBAHANI, Ali, 30006 Alpharetta (US); ROMPE, Markus, 91452 Wilhermsdorf (DE)

(57) **Abstract**

The present invention refers to method of secured data handling and transmission in a plant. Herein, the method enables to significantly improve the security of the data streams and especially the high security devices inside such plant to prevent a misuse or damage resulting from manipulation. Furthermore, the present invention refers to means to execute such method like a computer program product, an industrial plant, or a device. Furthermore, the present invention refers to the use of such method.

## Description

The present invention refers to a method of securely transmitting data from a high security part of an industrial plant to a database providing a lower security level. Furthermore, the present invention refers to a computer program product to execute such method. Additionally, the present invention refers to an industrial plant like an industrial power plant adapted to realize such method. Furthermore, the present invention refers to a device of the industrial plant being enabled to execute such method. Additionally, the present invention refers to a use of the inventive method or such inventive device to increase the security in an industrial plant.

Modern industrial plants are already containing a high amount of electronic controls, sensors and other devices being utilized to increase the productivity and security. The change from a process completely controlled by a human operator to the more and more automatically controlled processes took place over decades. However, the speed of the automation is speeding up. Industry 4.0 provides further demands to be fulfilled and new technologies developed allow to further optimize the systems. Also, the data originally collected for one reason meanwhile became topic of large scale data collection and handling. Big data collection and handling became an efficient tool to provide additional information and possibilities. However, this provides new challenges. For example, simply connecting central databases with the corresponding sensors and controls provides the problem that someone might misuse such possibility. By tampering with such database or even simply utilizing the established connection someone might manipulate the data transferred or tamper with the controls.

Therefore, for high sensitive areas and parts of industrial plants the operators are very reluctant to establish a corresponding access significantly reducing the benefit that can be obtained herewith. Especially, industrial plants like industrial power plants are very prone to malfunctions or damages resulting from incorrect sensor data and slight incorrect control commands easily provide significant damages. Utilizing firewalls, highly restricted access possibilities and further means provides a significant improvement and allows a limited access. Still the communication of sensitive areas of such industrial plant like especially an industrial power plant and, for example, some centralized database or computer system providing a lower security level simply based on the connections and possibilities of interactions required is a problematic topic. Thus, there is a need for an improved system providing the possibility to utilize state of the art data handling and interaction possibilities, wherein said system still fulfills the required security requirements.

This and further problems are solved by the products and methods as disclosed hereafter and in the claims. Further beneficial embodiments are disclosed in the dependent claims and the further description and figures. These benefits can be used to adapt the corresponding solution to specific needs or to solve additional problems.

According to one aspect the present invention refers to a method of securely transmitting data from a high security part of an industrial plant utilizing a continuous flow engine, preferably an industrial power plant, to a database providing a lower security level, wherein the method contains utilizing a data diode located between the high security part of an industrial plant and the database providing a lower security level. The term "data diode" as used herein refers to a technical device as known to be skilled person. Such data diode is strictly limited to allow a data transfer only in one direction. Preferably, a data transfer in the opposite direction is not only prevented by electronic or software methods, but it is physically prevented that a corresponding data transfer takes place.

Providing such network design in an industrial plant provides significant challenges. However, industrial plants utilizing continuous flow engines provide a strong demand of a solution enabling a continuous monitoring of such engine constantly providing data like sensor data. Simultaneously, modern and especially new continuous flow engines are highly sophisticated machines requiring highly skilled experts to efficiently evaluate their state and make best use of them. The present invention enables distantly located experts to review the state and utilization of such continuous flow engine without impairing the data security or overall security of the industrial plant. Examples of continuous flow engines are compressors as used in the oil and gas industry or turbines like gas turbines or steam turbines as utilized in industrial power plants.

This is surprisingly beneficial as it allows to employ highly sophisticated experts to monitor specific details of the industrial plants while a monitoring on site would not be efficient based on the lack of work for a single industrial plant. Furthermore, it becomes possible to utilize experts of different companies like the manufacturer of the industrial plant. The expert knowledge combined with the insight in the very specific sensor data of specific parts of the industrial plants provides, for example, the possibility to identify problems in an unparalleled early stage and optimize the maintenance intervals of such industrial plant. It was noted that such benefit is surprisingly beneficial for industrial power plants being typically provided by large companies often providing not only the devices utilized for energy production like gas turbines or steam turbines. In many cases such companies also provide the complete industrial power plants or at least the interior related to the energy production like the devices for energy production, the controls, the wiring, the transformer and the like. In such cases the knowledge of experts available on the side of the manufacturer is typically very detailed and making use of this knowledge provides a high benefit significantly higher than available for, for example, chemical plants that are often build on their own by the owner of the industrial plant by combining isolated generic systems.

After specifying the high security part of the network it can be interconnected to provide an isolated system. Isolating it prevents any unspecified data loss or tampering with this system. Placing such data diode between such high security network and a lower security network renders it possible to even continuously send data to some location outside without risking the security of the high security part. It even becomes possible to directly connect to the internet and send the data to some cloud.

According to a further aspect the present invention refers to a computer program product, tangibly embodied in a machine-readable storage medium, including instructions operable to cause a computing entity to execute an inventive method. Providing such computer program product allowing such data transfer

According to a further aspect the present invention refers to an industrial plant, preferably an industrial power plant, adapted to execute an inventive method. As explained above adapting such industrial power plant to enable the inventive method provides significant benefits.

According to a further aspect the present invention refers to a device of an industrial plant containing a data diode, wherein the device is adapted to be utilized in an inventive method, wherein the data diode is adapted to provide an unidirectional data transfer out of the high security part of the industrial plant. Especially, providing a specific device adapted to be utilized to upgrade an existing system to realize the inventive method is very beneficial.

According to a further aspect the present invention refers to a use of an inventive method or an inventive device to increase the security of the high-security part of the industrial plant, preferably an industrial power plant.

To simplify understanding of the present invention it is referred to the detailed description hereafter and the figures attached as well as their description. Herein, the figures are to be understood being not limiting the scope of the present invention, but disclosing preferred embodiments explaining the invention further.
Fig. 1 shows a scheme of an embodiment of a system utilizing the inventive method.
Fig. 2 shows a scheme of an alternative embodiment of a system executing the inventive method.

To simplify understanding of the present invention it is referred to the detailed description hereafter and the figures attached as well as their description. Herein, the figures are to be understood being not limiting the scope of the present invention, but disclosing preferred embodiments explaining the invention further.

Preferably, the embodiments hereafter contain, unless specified otherwise, at least one processor and/or data storage unit to implement the inventive method.

In the following the invention will exemplarily refer to an industrial power plant like industrial power plants utilizing a continuous flow engine like a gas turbine or a steam turbine. It was noted that the application of the invention in such area is especially beneficial. In more detail it was noted that, for example, the constantly increasing demands with regard to optimizing and automizing the energy production also provides significant challenges with regard to the data security. Especially, it was noted that the required backbone to realize such development opens possibilities to tamper with such data and, for example, damage a facility. Taking into account the amount of money lost based on corresponding problems this area might possibly become the field of blackmailing and comparable problems in case the security is not adapted accordingly to prevent such attacks being successful. Herein, it has to be noted that it is difficult to keep an electricity network stable and even short disruptions have to be avoided. Providing such possibility of protection already as preemptive measure avoids that such blackmailing becomes a lucrative possibility reducing the overall interest to do so. Thus, the benefit of utilizing such system in this area is significantly more than simply providing an improved security.

According to one aspect the present invention refers to a method as described above.

It was noted that this is typically especially useful in case of an internet connection of the lower security level database. According to further embodiments it is preferred that the database providing a lower security level contains a bidirectional connection to the Internet. Such connection becomes more and more necessary for industry 4.0. Simultaneously, it was noted that the inventive security feature can be surprisingly beneficially utilized for such system.

While it is possible to provide, for example, auxiliary and backdoor connections it is typically preferred that the unidirectional connection out of the high security part of the industrial plant is the sole connection. According to further embodiments it is preferred that the high-security part of the industrial plant is only connected to the database providing a lower security level by unidirectional connections. Excluding any connection to the Internet besides the unidirectional ones like the data diode as specified significantly increases the security of the data within the high-security part of the industrial plant. Furthermore, it significantly increases the security of said high-security part of the industrial plant, as it prevents an external third-party to tamper with the corresponding software and hardware.

It was further noted that the inventive connection is typically especially usefully utilized to transmit sensor data. According to further embodiments it is preferred that the data transmitted through the data diode contains sensor data. While many types of data can be beneficially transmitted through the data diode it was noted that the benefit for sensor data is especially significant. Considering that many security systems strongly rely on sensor data and its integrity it was noted that securing especially the reliability of such sensor data and preventing that third parties can tamper with such data results in a significant security benefit and utilizing a data diode as specified herein. Especially, it secures the system against grave damages resulting from such misuse that might easily lead to the damage are even destruction of the industrial plant.

Furthermore, it was noted that it is typically beneficial to utilize the inventive method for a high security part of a significant size. According to further embodiments it is preferred that the high security part of the industrial plant provides at least 3, more preferred at least 7, even more preferred at least 15, data sources. For example, such embodiments can contain at least 3, more preferred at least 5, even more preferred at least 7, sensors. Such data source can, for example, be providing collected data to be forwarded to through the data diode. However, such data source can, for example, also be providing processed data, wherein the processed data is based on data collected within the high security part. While it is possible to define very small high security parts like single sensors the benefit obtained from merging them into a bigger high security part is significant. Especially, when utilizing more detailed embodiments as disclosed herein providing additional benefits the possibilities as well as cost-value ratio improves significantly.

For certain applications it is preferred that at least a part of the sensor data is streamed through the data diode. According to further embodiments it is preferred that at least a part of the sensor data to be transmitted through the data diode is continuously streamed through the data diode. Immediately forwarding at least specific sensor data allows to continuously monitor the state in the high security area from the outside. Such possibility is well received to provide a significant benefit for typical applications as it, for example, allows to immediately react to deviations and problems.

Furthermore, it was noted that a continuous data can be beneficially transmitted batchwise through the data diode. According to further embodiments it is preferred that a continuous data stream like sensor data is transmitted through the data diode batchwise. The phrase "continuous data stream" as used herein refers to a data stream being created over a time period. Herein, it usually provides a beginning and an end and typically is starting again after some time. However, during the time of activity it creates a stream of data that can be continuously transmitted. Providing a batchwise transmission of the sensor data is surprisingly beneficial.

It can also be very interesting to provide a combination of continuous streaming and batchwise transfer of the sensor data. According to further embodiments it is preferred that the sensor data is transmitted through the data diode as continuous stream as well as batchwise data sets. Such embodiments are surprisingly beneficial. For example, it allows a constant monitoring of certain high priority sensors and transmit lower priority sensor data during times of low data transfer. This allows to provide spare capacity of the data transfer connections during highly frequented times or to secure that high priority data like alarms and correspondingly connected data is immediately transmitted without interrupting the transmission of parameters continuously to be monitored.

To ensure a reliable one direction data transfer of the data diode it is typically preferred that the direction of the data transfer is based on a physical effect. According to further embodiments it is preferred that the data diode is based on a physical effect limiting the data transfer to one direction. For example, such physical effect utilized in this context is electromagnetic induction. Utilizing such physical effect is surprisingly useful to provide a beneficial embodiments for the intended use, as it, for example, reliably prevents the data diode to be easily tampered with. Herein, the transmission of data is physically restricted by the electromagnetic transmission part and a one direction communication can, for example, be accomplished by only providing a receiving wiring on the outwards side of the data diode and refraining to provide a wiring for sending data through electromagnetic induction. Thus, it becomes physically impossible to send data in one direction, wherein any change in this context would require a significant physical tampering with the data diode. Even someone being physically present at the location of the data diode would typically not be able to simply change this. Additionally, it is surprisingly simple to furthermore include additional means to prevent a physical tampering and also a mere exchange of the whole data diode resulting in the significant benefit of utilizing such embodiment to provide a secure and reliable communication.

Typically, it is preferred to utilize a data diode providing a physical interruption of the data line. According to further embodiments it is preferred that the data diode provides an entry data line and an exit data line, wherein the entry data line and the exit data line provide an interruption containing at least one isolator separating the entry data line and the exit data line. For example, the entry data line and exit data line can be based on an electric conductive material utilizing electric current to transmit the data. The interruption can be realized as isolator being placed between the end of the entry of the data line and the beginning of the exit of the data line. Transmitting data through said isolator can be based on electromagnetic induction providing the possibility to easily and reliably restrict the data transfer to a single direction by physical means. It was noted that utilizing such type of data diode is especially useful for upgrades of industrial power plants. Especially, the combination of high reliability and security renders them surprisingly beneficial for such application.

For typical applications it is preferred to provide a protection against manipulation. According to further embodiments it is preferred that the batchwise transmitted sensor data is protected against manipulation. For example, such protection against manipulation can be achieved by encrypting the sensor data, providing a hash value, and so on. While it was originally considered that the security level would be already high enough providing such additional security against manipulation is surprisingly beneficial. For typical applications it was noted that such protection against manipulation provides the chance that a possible manipulation can be detected like identifying an error in a blockchain indicating such manipulation. For very high security application and especially many applications in industrial power plants it is typically preferred that the protection against manipulation includes that the data can be manipulated to provide apparently real data. For example, the corresponding data can be securely encrypted to prevent a third party to amend the data in a reasonable way resulting in seemingly real data to be forwarded. A corresponding amendment of such encrypted data by a third party lacking the corresponding keys would result in a data package being not decryptable in a reasonable way.

It was noted that also the specific protection against manipulation of only a part of the data provided from the high-security part of the industrial plant allows to notice generic manipulation outside of the high-security part. For example, in case the generic data transmitted from the industrial plants to a distributed database is manipulated the manipulation protection of the protected sensor data provided by the high-security part of the industrial plant allows to detect such action. It was noted that including such verification even only for the sensor data provides a significant benefit while only requiring very little processing power and effort. This resulted in an overall benefit acquired by such embodiment being far beyond the benefit to be expected.

Furthermore, it was noted that is typically beneficial to include a verifier. According to further embodiments it is preferred that the data transmitted through the data diode includes a verifier. The term "verifier" as used herein refers to a data set allowing to verify that the data provided through the data diode is complete and not manipulated. Such verifier can be provided in the form of, for example, hash values, predefined repeated parts of the data provided according to the specific system, or the like. Also, multiple systems can be combined like a predefined system to send a hash value of the data provided along the data and after a fixed time period. Resending such hash value independent from the corresponding data provides the surprisingly significant increase of the security level. In fact, it was noted that corresponding manipulations without the knowledge that such additional or security was implemented have been easily spotted leading to an extremely fast response time in case a data breach has happened. This even allows to prevent that grave problems occur based on internals smuggling corrupted data and software, viruses, and the like into the facility. For example, the possibility to indirectly detect such manipulation provides a significant benefit of the inventive system.

For typical applications it is preferred that such verifier additionally provides the possibility to restore at least a part of the data. According to further embodiments it is preferred that the verifier is adapted to allow a restoration of at least a part of the data being transmitted through the data diode in case the data is at least partially damaged. It was surprisingly noted that a corresponding verifier utilized accordingly requires little effort to additionally enable the skilled person to reconstruct the original data utilizing such verifier.

Herein, such verifier can also be realized without any significant processing resource. For example, it can be predefined that specific part of the sensor data provided by a specific sensor is again provided through the data diode hidden in some chaotic data. The expert is aware of a multitude of different possibilities to utilize such inventive method. Additionally or alternatively such sensor data can be submitted again completely or in part, wherein the sensor data is changed based on a predefined system. For example, based on the timestamp associated to the sensor the value of at least one sensor value is decreased or increased in a specific way. For example, the hour the sensor data is collected is added as number on the third the decimal place. Herein, this amended data is sent 23 minutes after providing the unamended data first to the data diode. Including such systems allow to verify the correct work of the interior of the system inside the high-security part of the industrial plant without being able to take a look inside.

Additionally, it was noted that it is typically beneficial to utilize a database for storing the transmitted data. According to further embodiments it is preferred that the data is transmitted to a database, preferably a distributed database, located outside the industrial plant. Especially, utilizing a distributed database is beneficial for many applications. As the invention allows to increase the overall security and to provide a permanent or regular connection to such distributed database it becomes possible to gain significantly more out of such data and provide evaluations, services and possibilities not available before. Thus, this apparently simple type of storing the data allows to provide a surprisingly big benefit.

For many applications possibilities like directly transmitting the transmitted data at least partially to a distributed database are beneficial. According to further embodiments it is preferred that the data transmitted through the data diode is at least partially, preferably completely, stored within a distributed database, wherein the distributed databases is protected against manipulation. This allows to securely store the data in case of emergencies. Taking into account potential damages to facilities in case of grave malfunctions in, for example, refineries utilizing compressors as continuous flow engines providing the possibility to secure relevant data outside the facility is of surprisingly high importance.

It is furthermore in typical application cases preferred that the data diode directly securely transmits at least a part of the data to a distributed database. According to further embodiments it is preferred that the method contains a secure data transfer from the data diode to the distributed database. For example, this can be achieved by a hardware encryption chip being implemented into the data diode allowing to prevent any tampering with the data. For example, a predefined VPN connection can be preset to directly forward the data to a specific location prevented that someone might intercept the data in between. Providing such possibility is surprisingly beneficial. Especially, the possibility to provide some stand alone system including such possibility being easily implemented provides a significant benefit being well received.

A further possibility to improve and adapt the inventive method according to certain requirements is to automatically trigger certain actions. According to further embodiments it is preferred that the method contains triggering an action in case a specific component is introduced into the high-security part of the industrial plant, wherein such action preferably contains a related data being transmitted through the data diode. While it is possible to couple such action on a specific type of components being possibly introduced in the high-security part of the industrial plant it is also possible to provide specific components containing on the hardware a corresponding code, smart contract, and the like to trigger such action. Examples of such actions are providing the information of the introduction of such component into the high-security part of the industrial plant, sending a data set like an identification code stored on the component through the data diode, executing a smart contract inside the high-security part of the industrial plant, and so on. Such smart contract executed inside the high-security part, for example, includes that a verification and/or test process is executed. This allows to automatically trigger a standard testing procedure evaluating whether the sensor data can be trusted inside the high-security part of the industrial plant while the information of the test result can be forwarded through the data diode. Herein, it is not necessary to provide a complete test result. For example, the data provided can be as simple verification that the specifications are fulfilled so that corresponding data is to be expected. Herein, the corresponding data stored on the hardware of the component can be encrypted or secured in any other fashion to prevent any potential misuse inside the high-security part of the industrial plant. Also, such first verification can be performed in the sandbox located inside the high-security part of the industrial plant. Only in case this first verification is positive the component is activated completely inside the high-security part of the industrial plant and a corresponding data set is sent through the data diode. Herein, it is also possible that in case the first verification is not positive a corresponding notification is created by the sandbox and sent through the data diode to inform the outside of the potential misuse or corrupted component provided in the high-security part of the industrial plant.

An example of a beneficial action to be triggered that way is a calibration. According to further embodiments it is preferred that the action triggered is a calibration of the component, and wherein data with regard to the calibration is transmitted through the data diode. Such data with regard to the calibration can be, for example, a simple message that the calibration was successful and the component like a sensor can be utilized as desired. Additionally or alternatively such data with regard to the corporation can be, for example, some data acquired during the calibration process like a correction value to be considered when reviewing the sensor data. For example, some highly sensitive sensors may require that the sensor data provided is corrected by some static correction value originating from interrelated parts based on the specific attachment of the sensor. It is also possible to include forwarding such data through the data diode to update the corresponding external system. Taking into account such possibly changing value allows to correctly evaluate the data provided external.

Furthermore, it is possible to provide specific spare parts of guaranteed quality verifying that the required standards are maintained. According to further embodiments it is preferred that the action contains sending a verification that the component introduced in the high security part fulfills predefined requirements. For example, such method prevents that low quality components like low quality sensors provided by a third party are introduced into the high security part endangering the overall security. This is especially beneficial for application cases utilizing continuous flow engines. As it is required to provide reliable data providing a sufficient quality to ensure the safety of such devices such feature is surprisingly beneficial.

According to further embodiments it is preferred that the method contains that detaching specific components of the high security part of the industrial plant triggers an action, wherein the action preferably contains transmitting a related data through the data diode. For example, a corresponding data including the information that a specific sensor has been detached can be forwarded through the data diode. Such automatic transmission of a corresponding information is surprisingly beneficial as it allows to significantly improve the monitoring capabilities of the method without impairing the restrictions that the owner of the industrial plant might place on the inside of some third party being tasked with such monitoring.

For many applications it is preferred to combine such triggered action in case a new component is introduced and an existing component is detached. For example, this allows to avoid that a reliable component is removed and replaced by a low quality copy not fulfilling the required quality. In such case a third party being tasked with monitoring the industrial plant can immediately contact the local operators to trigger an replacement with a reliable component to avoid damages.

A further possibility to meet increased demands for typical applications is to secure the transmitted data against manipulation. According to further embodiments it is preferred that the data transmitted through the data diode is at least partially secured against manipulation and transmitted to a database of a third party. The third party the data is transmitted to can be, for example, a company providing maintenance for the industrial plant. It was surprisingly noted that maintenance schedules and plans are subject to further optimization and calculating the risk more detailed allowing to lower corresponding maintenance fees seems to be required in the future. However, a more strictly planned maintenance service and its price requires that certain requirements have to be fulfilled and specific agreements with regard to how the devices of the industrial plant are utilized are to be met. For example, that no low quality copied component is introduced or the utilization is out of the normal operating conditions for a longer period. Yet it is not to be expected that a correspondingly required into the specific industrial plant will be readily accepted for such third-party. The fear of losing corresponding data to competitors should be too problematic. The inventive method allows to, for example, selectively provide data proving that the conditions have been met. This surprisingly provides a significant benefit enabling completely new business models. Without any intent to accuse potential industrial plant owners of any ill intent to misuse corresponding agreements it has to be expected that high-pressure might result in cases resulting in operators acting against corresponding guidelines to fulfill spontaneous demands. Such thing can easily result in the significant increase of the wear of the components inside a continues flow engine utilized in such industrial plant. This in turn results in original calculations with regard to maintenance schedules and lifetime deviating from reality. Financial losses rendering such business models unbearable might be the results. In the worst-case such deviation from the wear state and the lifetime of specific components becomes big enough to result in grave damages inside the industrial plant.

A type of data also beneficially transmitted through the data diode are alarms. According to further embodiments it is preferred that the data transmitted through the data diode contains an alarm securely transmitted to a database outside the industrial plant. Taking into account recent violations not strictly speaking within the sector of energy generation but other industrial areas transmitting such alarm is surprisingly beneficial. It was noted that providing such system allows to fulfill more strict regulations that might be expected. Automatically and securely forwarding such alarm, for example, meets to demand that the corresponding alarm and its potential threat to the safety of, for example, people living nearby is forwarded and corresponding steps can be taken. Simultaneously, the inventive method prevents such automatic system to require a constant bidirectional connection to such third-party becoming a security threat being surprisingly assessed being far more dangerous than most alarms themselves. The inventive method and its embodiments as described herein may be embodied by a computer program product or a plurality of computer program products, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which includes storage devices and signals, in compressed or uncompressed form.

According to a further aspect the present invention refers to a computer program product, tangibly embodied in a machine-readable storage medium, including instructions operable to cause a computing entity to execute an inventive method.

The term "computer" refers to any electronic device comprising a processor, such as a general-purpose central processing unit (CPU), a specific purpose processor or a microcontroller. The processor is adapted to execute a special computing task. A computer is capable of receiving data (an input), of performing a sequence of predetermined operations thereupon, and of producing thereby a result in the form of data or signals (an output). Depending on context, the term "computer" will mean either a processor in particular or can refer more generally to a processor in association with an assemblage of interrelated elements contained within a single case or housing.

The computer program product may be processed in a distributed manner, such as that certain steps are performed on a first computing entity (e.g. at the turbine) and that other steps are performed on a second computing entity (e.g. on a central server).

The computer program product may be offered, placed on market, used, imported and/or stored as (and thus may be part of) a computer program product. Thus, the computer program product may be provided on a storage medium (computer readable medium, like a computer disc or a memory stick etc.). Alternatively, the computer program product may be provided via download by means of a respective network connection to a server, which stores the computer program product by providing a link to the server with the computer program product stored thereon. A "computer-readable medium" or "storage medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a non-exhaustive list) of the computer-readable medium can include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CDROM).

The computer program product according to further embodiments is adapted to execute the embodiments of the inventive method and the embodiments of the inventive system. In this context, it has to be understood that each single or a combination of the specific embodiments as described above can be utilized to modify the computer program product as specified.

According to further aspect the present invention refers to a storage device for providing an inventive computer program product, wherein the device stores the computer program product and/or provides the computer program product for further use.

According to a further aspect the present invention refers to an industrial plant adapted to execute an inventive method. Typically, it is preferred that the industrial plant is an industrial power plant. Utilizing the inventive method for such industrial power plant provides a surprisingly high benefit. For example, the security of the high security parts of such industrial power plants benefits surprisingly significantly from such method. Also, it allows to enable cloud services and external access without impairing the security of the installation. The overall benefit gained is surprisingly high also beyond the explicit points referenced. In fact, it also enables to introduce new features and services providing an additional significant improvement.

According to a further aspect the present invention refers to a device of an industrial plant containing a data diode, wherein the device is adapted to be utilized in an inventive method, wherein the data diode is adapted to provide an unidirectional data transfer out of the high security part of the industrial plant.

For many typical applications it is beneficial introduce a data security hardware device. According to further embodiments it is preferred that the device contains at least one hardware component securing the data security like a block chain chip or encryption component.

For applications allowing a simple implementation of the inventive method in an existing industrial plant it can be preferred to provide the inventive device with a data storage being utilized as lower security database. According to further embodiments it is preferred that the device contains a data storage to at least temporarily store the data received through the data diode. Typically, it is preferred that the data storage contains a database providing a lower security than the high security part of the industrial plant. For example, this data storage can be accessed by a third party tasked with service and maintenance work. Utilizing such data allows the third party to surprisingly significantly optimize the maintenance schedule and respond extremely fast in case of urgency.

It was noted that the inventive device can also be provided as upgrade package to be implemented into an existing IT environment of an industrial plant like an industrial power plant. According to further embodiments it is preferred that the device is adapted to automatically retrieve predefined data from one part of a network of an industrial plant, and wherein the device is adapted to transmit at least a part of the retrieved data to a different part of the network of the industrial plant and to prevent that a data transfer is executed in the opposite direction. Such upgrade component is especial useful to provide an easy solution to be implemented with minimum effort required. Furthermore, it allows to provide generic upgrade units allowing an additional security as such stand alone systems provide the possibility to include further features to prevent a tampering with the device and a possible manipulation.

To simplify the installation it can be preferred to provide a preconfigured device providing an automatic search in an available data infrastructure of the industrial plant. According to further embodiments it is preferred that the device contains an automatic identification function, wherein the automatic identification function reviews the high security part of the industrial plant with regard to potentially relevant data sources. For example, the automatic idenfication function can identify available sensors, control units and security devices. Such function can be set to automatically select the data sources and data sets to be forwarded automatically. However, for typical embodiments it is preferred that such automatic identification function provides suggestions what might be relevant to be forwarded through the data diode. The operator, owner or a comparable person can then select the data to be forwarded and, thus, restrict the access to the exactly specified amount. This feature was considered being especially beneficial in case the application contains the involvement of a third party to review the data transmitted through the data diode.

For example, it is possible to provide such device as boxed device providing only ports to connect said device to an existing network system. Such boxed device can, for example, be provided by enclosing all essential components by a casing. Such casing can be protected against manipulation in various ways. For example, such protection can be an electronic protection including sensors indicating, for example, a tampering or opening of the casing. Herein, such event can trigger an alarm or notification directly sent to a specified person or database. Additionally or alternatively such protection can be provided as hardware solution. For example, the device can be enclosed in a securely welded casing preventing an opening of the device without, for example, destroying or cutting off a part of the casing. Such hardware solution can also include means to prevent a further functioning of the device in case the casing is damaged. For example, the interior of the casing can be provided with an electric circuit triggering a short circuit rendering the device inoperable in case of being interrupted based in, for example, a part of the casing being cut out. Additionally or alternatively, such protection can be, for example, a photo sensor sensing electromagnetic waves like visible light entering the interior of the casing. Also, it is possible to provide such solution including a deletion process to destroy, for example, relevant keys and data contained in the device.

According to a further aspect the present invention refers to a use of an inventive method or an inventive device to increase the security of the high-security part of the industrial plant, preferably an industrial power plant.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

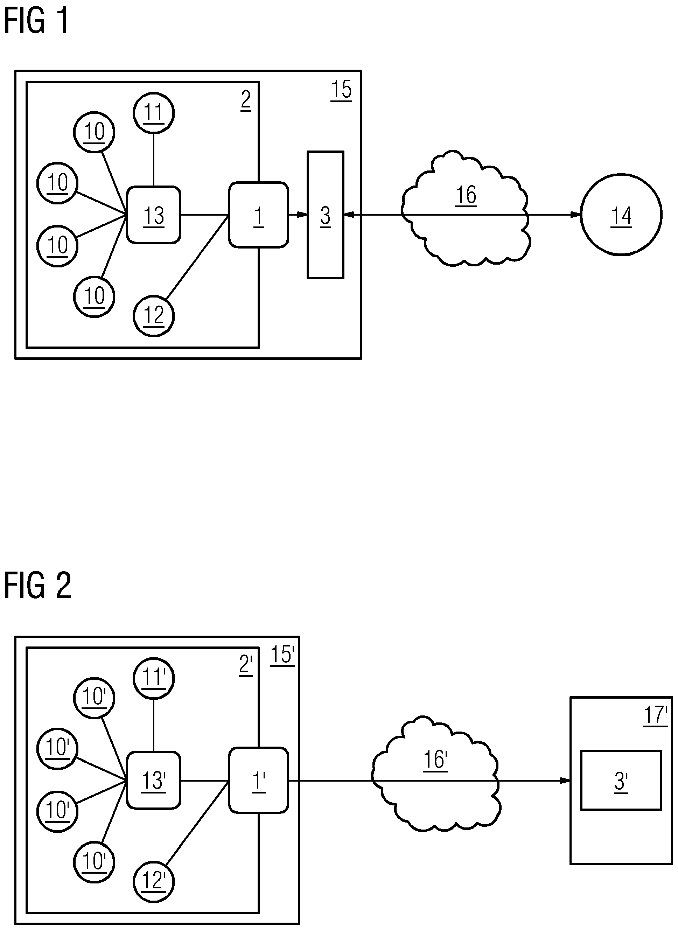

Figure 1 shows a scheme of an embodiment of a system utilizing the inventive method. According to this method data from a high security part 2 of an industrial power plant 15 utilizing a continuous flow engine is securely transmitted to a database 3 providing a lower security level. Herein, a data diode 1 located between the high security part 2 of the industrial power plant and the database 3 providing a lower security level. The database 3 providing a lower security level contains a bidirectional connection to the Internet 16. This allows to communicate with a distributed database 14 being also connected to the internet 16.

Based on this connection the system as shown in the figure provides the possible risk that someone might, for example, act as distributed database 14 by interrupting the real connection through the internet after monitoring the data exchange for some time. While the possibility to possibly gain access to the low security database 3 is already problematic enough the possibility that someone might access the high security part 2 of the industrial power plant 15 has to be prevented. Also, someone might be able to access such lower security database 2 directly and install some malware allowing remote access or directly tampering with the highly sensitive parts of the industrial power plant 15. Such possibilities are reliably and efficiently prevented by the inventive method as the data diode 1 prevents such access from the low security database 3.

Also, it becomes possible to utilize the high security part 2 as local reference to manually and/or automatically check the integrity of the lower security database 3. For example, it can be programmed that a verifier or core components of the lower security database 3 can be provided from the high security part 2 at fixed intervals to provide a reference to compare the existing database and its components. Also, it is possible to replace corresponding critical components of the database 3 automatically to directly replace corresponding parts that had been tampered with.

The system as shown in figure 1 only provides the connection through the data diode 1 between the high security part 2 and the lower security database 3. While it is possible to implement a further data diode 1 to provide an additional unidirectional connection no bidirectional connections are provided. In specific cases it can be preferred that, for example, some bidirectional connection being highly secured can be also included to provide a backdoor being able to be used to access the system in case of emergency. However, for typical application cases it is preferred to provide a system as shown in figure 1 providing no bidirectional communication of the high security part 2 of the industrial power plant 15.

The data transmitted through the data diode 1 contains sensor data provided by the sensors 10. While the sensors 10 provide a continuous stream of data said data is collected together with data from the control device 11 and temporarily stored in a high security database 13. Said high security database 13 stores the data temporarily and sends batches of data through the data diode 1. The data send through the data diode 1 from the database 13 is protected against manipulation by encrypting it to allow a secure transfer through the low security database 3. This, for example, prevents any tempering with the data in case the low security database 3 is corrupted.

The security device 12 on the other hand sends data referring to alarms, reports and observations through the data diode as they are available. Data send from the security device 12 is partially encrypted. For example, the reports and observations provided by the security device 12 are encrypted to protect them against tampering. This also allows to verify that all alarms have been correctly processed after transmitting them through the data diode as the corresponding information is also contained in the secured reports.

The data diode 1 is furthermore adapted to process the data transmitted through it to provide a verifier of the transmitted data. This verifier is primarily utilized to verify that the data received through the data diode 1 is transmitted correctly. Such verifier is very beneficial as it allows to immediately identify a malfunction or tampering with the data diode 1. In addition the sensor data from the sensors 10 are provided with an identifier allowing not only to verify the content of the sensor data, but said verifier also allows to restore the sensor data up to a certain degree in case the data is partially corrupted. Combining this with the batchwise transfer of the sensor data through the data diode 1 is very beneficial for typical embodiments. For example, it allows to utilize existing hardware with lower processing power and also process high amounts of data with the same quality and security during times of high stress or unusual use. Additionally, it was noted that under special circumstances some data transfer from the high security database 13 might be interrupted based on urgent transmissions from the security device 12. Such interrupted or maybe even damaged data can be typically easily patched again using such identifier avoiding complicated processes as the corresponding data cannot simply be requested again from the high security database 2 based on the unidirectional connection.

The reports and the sensor data are not only stored in the low security database 3. They are furthermore transmitted to a distributed database 14 using a connection through the internet 16. This allows to remotely access the corresponding data. Furthermore, expert knowledge can be utilized by operators being located at different locations. This is especially useful for industrial power plants being typically build and continuously further developed by a third party company. Utilizing this knowledge allows to significantly improve the overall benefit of such industrial power plants and even provides the possibility of new types of service and maintenance. Also, suggestions of upgrades and improved processes can be provided based on the increased inside in the use and state of the industrial power plant. Simultaneously, there is no risk of losing strategic data for the owner of the industrial power plant, as the owner is able to reliable restrict the access to possible data based on the unidirectional data transfer of the data diode 1. The data is furthermore stored in the distributed database 14. Providing such external storage is also a significant benefit. Especially in case of unexpected problems and even significant damages it becomes possible to securely retrieve the data and review them at a later point. For example, in case of people getting hurt or possibly even killed such data is of high importance to prove a correct maintenance of the industrial power plant 15 and even prevent an official shut down of the corresponding facility in case there is a doubt that the safety of the facility is guaranteed.

To provide the possibility to still correctly align the sensor data to a specific sensor 10 and especially the specific type and model an automatic notification system is implemented. A part of the components of the high security part 2 like the sensor are adapted to trigger an action when being introduced or replaced. In such case a corresponding notification is send through the data diode to notify the outside of such replacement. This surprisingly effectively prevents an incorrect association of the sensor data with wrong devices resulting in a possible misinterpretation of corresponding sensor data. For example, some new sensor might provide a higher level of sensitivity identifying a significantly higher amount of fluctuations. Thus, corresponding fluctuations contained in the sensor data after receiving information with regard to the replacement are correctly associated with the new sensor and not interpreted as new behavior in the high security part 2 of the industrial power plant 15. Though it sounds simple this significantly decreases the number of false alarms providing a surprisingly big benefit for, for example, monitoring such industrial power plant 15. Additionally, introducing such sensor 10 triggers a calibration process inside the high security part 2. Automatically providing such calibration further increases the user friendliness and prevents that based on a lack of calibration forgotten in hurry some incorrect data is transmitted through the data diode 1 that might even give rise to further misinterpretations after some calibration is finally triggered after a while.

The data diode 1 is also provided as user friendly package system being adapted to be introduced in an existing data exchange system of an industrial power plant 15 as single device. Herein, the corresponding high security part 2 and lower security part are specified and the data connections out of the high security part 2 are limited to the connection through the device containing the data diode 1. Corresponding experts from the manufacturer of the data diode easily adapt the existing system contained in the high security part 2 to forward the required data automatically. It was noted that within a short time and a minimum amount of tests an existing system can be adapted accordingly allowing to implement the inventive method at such industrial power plant. This allows to use the inventive method to significantly increase the security of an existing industrial power plant 15 and especially a high security part of the data infra structure of such industrial power plant 15.

Figure 2 shows a scheme of an alternative embodiment of a system executing the inventive method. Comparable to the example as shown in figure 1 the embodiment of figure 2 shows an industrial power plant 15' providing a high security part 2' of its data infrastructure. This high security part 2' has been separated from the remaining data infra structure and is only connected to the outside by the data diode 1'. Comparable to the embodiments as shown in figure 1 four sensors 10' are displayed. The data transfer from the sensors 10' and the control device 11' to the database 13' are comparable to the embodiment as shown in figure 1. Also the data transfer of the security device 12' is comparable to the aforementioned embodiment.

Contrary to the embodiment of figure 1 the data diode provides a connection through the internet 16'. The low security database 3' is not located in the industrial power plant 15'. In fact, the lower security database 3' is located in a site of the manufacturer 17' of the industrial power plant 15'. Such embodiment allows the owner of the industrial power plant 15' to directly access the resources of the manufacturer 17' to utilize the extensive know-how and expert knowledge located on the side of the manufacturer 17' to make best use of the industrial power plant 15'. It was noted that this allows to outfarm a huge amount of monitoring work and training of the operators on the side of the owner of the industrial power plant 15'. Also experiences collected for different comparable industrial power plants 15' can be reasonably utilized to proactively provide solutions for possible problems that might be indicated in the collected data.

Based on the encryption and verifiers utilized no data loss occurs when transmitting the data through the internet 16'. Simultaneously, even the manufacturer 17' can access the high security part 2' based on the data diode 1' as utilized according to the present invention.

The scope of protection of the present invention is specified by the appended claims and is not restricted by the features explained in the description or shown in the drawing.

## Claims

1. Method of securely transmitting data from a high security part (2, 2') of an industrial plant (15, 15') utilizing a continuous flow engine to a database (3, 3') providing a lower security level,
wherein the method contains utilizing a data diode (1, 1') located between the high security part of the industrial plant (15, 15') and the database (3, 3') providing a lower security level.

2. Method according to claim 1, wherein the database (3, 3') providing a lower security level contains a bidirectional connection to the Internet (16, 16').

3. Method according to any of claims 1 to 2, wherein the high-security part (2, 2') of the industrial plant (15, 15') is only connected to the database (3, 3') providing a lower security level by unidirectional connections.

4. Method according to any of claims 1 to 3, wherein the data transmitted through the data diode (1, 1') contain sensor data.

5. Method according to claim 4, wherein the sensor data is transmitted through the data diode (1, 1') batchwise.

6. Method according to claim 5, wherein the batchwise transmitted sensor data is protected against manipulation.

7. Method according to any of claims 1 to 6, wherein the data transmitted through the data diode (1, 1') includes a verifier.

8. Method according to any of claims 1 to 7, wherein the data is transmitted to a database, preferably a distributed database (14), located outside the industrial plant (15, 15').

9. Method according to any of claims 1 to 8, wherein the method contains triggering an action in case a specific component is introduced into the high-security part (2, 2') of the industrial plant (15, 15').

10. Method according to any of claims 1 to 9, wherein the data transmitted through the data diode (1, 1') is at least partially, preferably completely, stored within a distributed database (14),
wherein the distributed database (14) is protected against manipulation.

11. Method according to any of claims 1 to 10, wherein the data transmitted through the data diode (1, 1') is at least partially secured against manipulation and transmitted to a database of a third party.

12. Computer program product, tangibly embodied in a machine-readable storage medium, including instructions operable to cause a computing entity to execute a method according to any of claims 1 to 11.

13. Industrial plant (15, 15') adapted to execute a method according to any of claims 1 to 11.

14. Device of an industrial plant (15, 15') containing a data diode (1, 1'), wherein the device is adapted to be utilized in a method according to any of claims 1 to 11, wherein the data diode (1, 1') is adapted to provide an unidirectional data transfer out of the high security part (2, 2') of the industrial plant (15, 15').

15. Use of a method according to any of claims 1 to 11 or a device according to claim 14 to increase the security of the high-security part (2, 2') of the industrial plant (15, 15').
